# EUROPÄISCHE PATENTANMELDUNG

(11) **EP 3 053 665 A1**
(43) Veröffentlichungstag der Anmeldung: **10.08.2016**
(21) Anmeldenummer: 16154738.5
(22) Anmeldetag: 08.02.2016
(51) Int. Cl.: B21B 38/00, G01N 21/86, G01J 5/00, G01J 5/08

(54) **VERFAHREN UND VORRICHTUNG ZUR BERÜHRUNGSLOSEN MESSUNG HOHER OBERFLÄCHENTEMPERARTUREN AN EINEM METALLISCHEN OBJEKT**

(30) Priorität: 07.02.2015 EP 15154244
(71) Anmelder: CenterTec GmbH, 41564 Kaarst (DE)
(72) Erfinder: Luz, Werner, 41564 Kaarst (DE)
(74) Vertreter: Lotze, Rüdiger

(57) **Zusammenfassung**

Die Erfindung betrifft ein Verfahren zur berührungslosen Messung hoher Oberflächentemperaturen an einem metallischen Objekt mit niedrigem Emissionsgrad, insbesondere einem Aluminiumband (B), umfassend die folgenden Verfahrensschritte:
- Bereitstellen einer Strahlquelle (130, 140, 150) zur Erzeugung eines Messstrahls mit einem definierten Strahlungsspektrum,
- Bereitstellen einer Detektoreinheit (130. 140. 150) zur Messung der Emission an der Oberfläche des metallischen Objekts (B),
- Auftrag einer Beschichtung (S) zumindest auf einen Teil der zu messenden Oberfläche des metallischen Objekts (B), wobei die Beschichtung (S) temperaturstabil in einem Temperaturbereich > 450°C ist,
- Bestrahlung der beschichteten Oberfläche mit dem Messstrahl der Strahlquelle,
- Messung des Emissionsspektrums der Beschichtung (S) durch die Detektoreinheit und Erzeugen eines die Temperatur der Beschichtung (S) charakterisierenden elektrischen Signals in der Detektoreinheit.
Ferner betrifft die Erfindung eine Vorrichtung zur berührungslosen Messung hoher Oberflächentemperaturen an einem metallischen Objekt (B) mit niedrigem Emissionsgrad, insbesondere einem Aluminiumband sowie eine Anlage (100) umfassend eine solche Vorrichtung.

## Beschreibung

Die Erfindung betrifft ein Verfahren zur berührungslosen Messung hoher Oberflächentemperaturen an einem metallischen Objekt mit niedrigem Emissionsgrad, insbesondere einem Aluminiumband. Ferner betrifft die Erfindung eine Vorrichtung zur Durchführung des Verfahrens sowie eine Bandbehandlungsanlage.

Bei der Produktion von Blechen aus Metallbändern für die Automobil- oder Flugzeugindustrie ist der Glühprozess mit definiertem Temperaturprofil von entscheidender Bedeutung für die spätere Gebrauchsfähigkeit der Bleche. Aufgrund des hohen Temperaturniveaus in den Glühöfen von > 500°C eignen sich jedoch nur wenige Messverfahren für die geforderte in situ-Temperaturmessung.

Beim Glühen von Aluminiumbändern ist es aus der Praxis bekannt, die Messung des Temperaturprofils bei dem Transport der Bänder durch den Glühofen mittels in das Band integrierter Thermoelemente durchzuführen. Um einen dauerhaften Kontakt zwischen dem Thermoelement und dem zu messenden Metallband zu gewährleisten, werden die Thermoelemente in entsprechende in dem Metallband vorgesehene Bohrungen eingebracht. Ferner muss die elektrische Kontaktierung der Thermoelemente nachgeführt werden, was die maximale Bandgeschwindigkeit auf ca. 25 m/min begrenzt.

Bei einer in modernen Produktionsverfahren üblichen Bandgeschwindigkeit von 50 - 70 m/min ist eine Anbringung der Thermoelemente im laufenden Betrieb daher ebenso wenig möglich wie die schleppende Nachführung der elektrischen Kontaktierung.

Es besteht daher Bedarf an einem berührungslosen und damit für einen kontinuierlichen Messbetrieb bei laufender Anlage geeigneten Verfahren zur Messung hoher Temperaturen. Hierzu stehen grundsätzlich optische Messverfahren zur Verfügung. Im Falle von Aluminiumbändern erweist sich allerdings der geringe Emissionsgrad von Aluminium als Problem für ein optisches Messverfahren.

Der Erfindung liegt daher die Aufgabe zugrunde, ein Verfahren und eine Vorrichtung zur berührungslosen Temperaturmessung an einem metallischen Objekt mit niedrigem Emissionsgrad, insbesondere einem Aluminiumband, anzugeben, welche(s) insbesondere auch bei hohen bis sehr hohen Oberflächentemperaturen eine zuverlässige Messung erlaubt und speziell bei schnell laufenden metallischen Bändern ohne Probleme im laufenden Prozess eingesetzt werden kann.

Nach einem ersten Aspekt der Erdfindung wird die Aufgabe erfindungsgemäß mit einem Verfahren zur berührungslosen Messung hoher Oberflächentemperaturen an einem metallischen Objekt mit niedrigem Emissionsgrad, insbesondere einem Aluminiumband, gelöst, wobei das Verfahren folgende Schritte aufweist:
- Bereitstellen einer Strahlquelle zur Erzeugung eines Messstrahls mit einem definierten Strahlungsspektrum,
- Bereitstellen einer Detektoreinheit zur Messung der Emission an der Oberfläche des metallischen Objekts,
- Auftrag einer Beschichtung zumindest auf einen Teil der zu messenden Oberfläche des metallischen Objekts, wobei die Beschichtung temperaturstabil in einem Temperaturbereich >450°C ist,
- Bestrahlung der beschichteten Oberfläche mit dem Messstrahl der Strahlquelle,
- Messung des Emissionsspektrums der Beschichtung durch die Detektoreinheit und Erzeugen eines die Temperatur der Beschichtung charakterisierenden elektrischen Signals in der Detektoreinheit.

Der besondere Vorteil des erfindungsgemäßen Verfahrens besteht darin, dass es ohne weiteres in bestehende Anlagen zum Glühen metallischer Objekte, insbesondere von Metallbändern, integriert werden kann. Da es berührungslos arbeitet, ist es prinzipiell auch für höchste Bandgeschwindigkeiten geeignet. Dadurch, dass primär das Emissionsspektrum der von der Strahlquelle bestrahlten Beschichtung in der Detektoreinheit gemessen wird, sind geringe Emissionsgrade der metallischen Oberfläche, wie sie beispielsweise bei Aluminium vorliegen (0,05) kein Nachteil bei der Temperaturmessung. Da die aufgetragene Beschichtung unmittelbar die zu messende Oberflächentemperatur des metallischen Objektes annimmt, kann auf die viel höheren Emissionsgrade der gewählten Beschichtung zurückgegriffen werden, was eine stabile Messung im diskontinuierlichen wie auch im kontinuierlichen Betrieb ermöglicht.

Nach einer ersten vorteilhaften Ausgestaltung der Erfindung ist die Strahlungsquelle eine IR-Strahlquelle und die Detektoreinheit eine IR-Detektoreinheit. Strahlquellen und Detektoren auf Basis von infraroter Strahlung sind seit langem in industriellem Einsatz und zeichnen sich durch hohe Zuverlässigkeit und geringe Störanfälligkeit aus. Bevorzugt sind Strahlquelle und Detektoreinheit in einer IR-Messsonde integriert. Dabei sind beide Komponenten derart zueinander und zur zu untersuchenden Oberfläche ausgerichtet, dass ein von der Strahlquelle ausgesandter Messstrahl auf die zu untersuchende Oberfläche trifft und die infolgedessen dort emittierte Strahlung auf die Detektoreinheit gestrahlt wird.

Erfindungsgemäß erfolgt an dem metallischen Objekt der Auftrag einer Beschichtung zumindest auf einen Teil seiner zu messenden Oberfläche, wobei die Beschichtung temperaturstabil in einem Temperaturbereich >450°C ist. Hierzu stehen zahlreiche Verfahren zum Schichtauftrag zur Verfügung. Nach einer vorteilhaften Ausgestaltung der Erfindung wird die Beschichtung bevorzugt mittels Sprühen oder Rollenauftrag auf die Oberfläche des metallischen Objekts aufgebracht. Hierdurch lassen sich gleichmäßige Schichten auch bei hohen Relativgeschwindigkeiten zwischen der Auftragseinheit und der zu beschichtenden Oberfläche des metallischen Objekts auftragen.

Um ein ausreichend starkes Strahlungsemissionssignal für die Temperaturmessung zu erhalten, wobei gleichzeitig sichergestellt sein muss, dass die Beschichtung ein die zu messende Oberflächentemperatur des metallischen Objekts eindeutig bestimmendes Signal liefert, ist nach einer weiteren vorteilhaften Ausgestaltung der Erfindung bevorzugt, dass die Nass-Schichtdicke der Beschichtung 5 µm bis 20 µm und/oder die Trockenschichtdicke 1 bis 10 µm beträgt.

Von besonderer Bedeutung ist die Auswahl einer geeigneten Beschichtung, die sich durch einen hohen Emissionsgrad und eine gute Auftragfähigkeit auf metallischen Oberflächen auszeichnen muss. Wie Untersuchungen der Anmelderin ergeben haben, eignen sich hierzu insbesondere Silicatschmelzen, insbesondere Wasserglas. Der besondere Vorteil der Verwendung von Wasserglas besteht in den vergleichsweise hohen Emissionsgraden, die in dem injteressierenden Temperaturbereichen zwischen 0,5 bis 0,75 liegen.

Nach einer weiteren vorteilhaften Ausgestaltung der Erfindung ist das zu messende metallische Objekt als Metallband, insbesondere als Aluminiumband ausgebildet. Derartige Metallbänder werden in hohen Tonnagen in der Automobil- und Flugzeugindustrie weiterverarbeitet und durchlaufen dabei verschiedene thermische Behandlungsverfahren, wobei die Oberflächentemperatur stets einen wichtigen Prozessparameter darstellt.

Um bei dem erfindungsgemäßen Verfahren insgesamt des Aufwand zu reduzieren, ist es vorteilhaft, die Beschichtung nur lokal begrenzt aufzutragen. Nach einer vorteilhaften Ausgestaltung der Erfindung ist daher vorgesehen, dass die Beschichtung auf dem Metallband über eine vordefinierte Länge und Breite, insbesondere zwischen 1 und 10 m Länge und 50 bis 200 mm Breite, aufgetragen wird. Es versteht sich dabei, dass im Falle eines nicht bandförmigen metallischen Objekts ebenfalls nur ein lokal begrenzter Bereich auf dessen Oberfläche zwecks Messung der Oberflächentemperatur beschichtet werden muss.

Wird die Oberflächentemperaturmessung an einem Metallband durchgeführt, so ist es vorteilhaft, dass die Beschichtung aufgetragen und die Messung der Oberflächentemperatur bei laufender thermischer Behandlung des Metallbandes durchgeführt wird. So kann beispielsweise die Beschichtung auf die Oberfläche des Bandes unmittelbar vor dessen Eintritt in eine thermische Bandbehandlungsanlage, beispielsweise einen Glühofen, erfolgen und sodann die Messung des Emissionsspektrums der Beschichtung in der Bandbehandlungsanlage durch eine dort entsprechend vorgesehene Strahlquelle und Detektoreinheit durchgeführt werden.

Das Metallband kann für die Messung und ggf. eine gleichzeitig stattfindende thermische Behandlung in verschiedener Form bereitgestellt werden. Besonders bevorzugt ist die Bereitstellung des Metallbandes in Form von Coils, wobei die Beschichtung auf den ersten 1 bis 10 m oder den letzten 1 bis 10 m des Metallbandes aufgetragen wird.

Insbesondere bei der Oberflächentemperaturmessung an bandförmigem Material wird bevorzugt, das Verfahren zur berührungslosen Messung hoher Oberflächentemperaturen an einem metallischen Objekt mit niedrigem Emissionsgrad kontinuierlich zu betreiben.

Wie bereits erwähnt, ist das erfindungsgemäße Verfahren geeignet, mit einem anderen Verfahren zur thermischen Behandlung metallischer Objekte, insbesondere Metallbänder, speziell Aluminiumbänder, kombiniert zu werden, um so Prozesszeiten und Platzbedarf zu reduzieren. Besonders bevorzugt ist dabei, wenn das erfindungsgemäße Verfahren in einem Bandschwebeofen durchgeführt wird.

Nach einem weiteren Aspekt der vorliegenden Erfindung wird die eingangs genannte Aufgabe mit einer Vorrichtung zur berührungslosen Messung hoher Oberflächentemperaturen an einem metallischen Objekt mit niedrigem Emissionsgrad, insbesondere einem Aluminiumband, gelöst, wobei die Vorrichtung eine Strahlquelle zur Erzeugung eines Messstrahls mit einem definierten Strahlungsspektrum, eine Detektoreinheit zur Messung der Emission an der Oberfläche des metallischen Objekts und eine Beschichtungseinheit zum Auftrag einer hochtemperaturbeständigen Beschichtung auf zumindest einen Teil der zu messenden Oberfläche des metallischen Objekts umfasst.

Zu den Vorteilen der erfindungsgemäßen Vorrichtung gelten die vorstehend genannten Vorteile entsprechend.

Ein weiterer Aspekt der vorliegenden Erfindung betrifft eine Anlage zur thermischen Behandlung von Metallbändern, insbesondere von Aluminiumbändern, umfassend eine Vorrichtung nach Anspruch 12 oder 13. Zu den Vorteilen der erfindungsgemäßen Vorrichtung wird wiederum auf die vorstehend genannten Vorteile verwiesen.

Nach einer vorteilhaften Ausgestaltung der Erfindung umfasst die Anlage wenigstens einen Glühofen und optional eine in Bandlaufrichtung dahinter angeordnet eine Kühleinheit, speziell einen Luftkühler.

Die Erfindung wird im Folgenden anhand einer ein Ausführungsbeispiel darstellenden Zeichnung erläutert. Es zeigt:
- Fig. 1: eine Anlage zum Glühen von Aluminiumband mit integrierter Temperaturmessung in einer ersten Ausführung im Längsschnitt, und
- Fig. 2: eine weitere Anlage zur thermischen Behandlung von Aluminiumband in einer schematischen Längsschnittdarstellung.

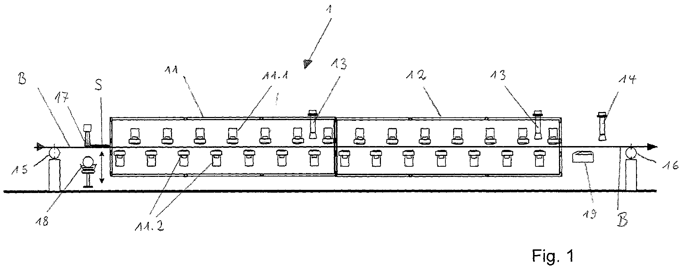

In Fig. 1 ist eine Anlage zum Glühen von Aluminiumband mit integrierter Temperaturmessung in einer ersten Ausführung im Längsschnitt dargestellt. Die Anlage umfasst einen Glühofen 1, welcher seinerseits in eine Glühsektion 11 und eine Haltesektion 12 aufgeteilt ist. Durch beide Sektionen 11, 12 kann ein blankes Aluminiumband B schwebend geführt werden, wobei die für die schwebende Führung erforderlichen Tragkräfte durch einen aus einer Anzahl Schwebedüsen 11.1, 11.2 austretenden heißen Luftstrom erzeugt werden. Der Luftstrom wird in an sich bekannter Weise mittels Radialventilatoren (nicht dargestellt) erzeugt und über geeignete Blaskanäle (ebenfalls nicht dargestellt) den oberen Schwebedüsen 11.1 sowie den unteren Schwebedüsen 11.2 zugeführt.

In der Glühsektion 11 wird das Aluminiumband auf eine Temperatur von > 600°C, beispielsweise 630°C, erwärmt und in der Haltesektion 12 auf diesem Temperaturniveau gehalten. Sowohl in der Glühsektion 11 als auch in der Haltesektion 12 ist jeweils eine IR-Messsonde 13 angeordnet. Jede IR-Messsonde 13 umfasst eine IR-Strahlquelle (nicht im einzelnen dargestellt) sowie eine IR-Detektoreinheit (ebenfalls nicht im einzelnen dargestellt). Dabei sind IR-Strahlungsquelle und IR-Detektoreinheit innerhalb der IR-Messsonde 13 derart integriert und relativ zueinander und zur zu messenden Oberfläche angeordnet, dass die von der außerhalb der IR-Messsonde 13 angeordneten Bandoberfläche nach Strahlungsbeaufschlagung durch die IR-Strahlquelle emittierte IR-Strahlung von der IR-Detektoreinheit hinsichtlich Intensität und spektraler Verteilung präzise gemessen werden kann. Bevorzugt weist die IR-Messsonde 13 eine Temperaturkompensation auf. Vorliegend sind in jeder Sektion 11, 12 des Glühofens 1 jeweils eine IR-Messsonde 13 derart oberseitig angeordnet, dass mit dem vorstehend beschriebenen Prinzip die Temperatur der oberseitigen Oberfläche eines durch die Sektionen 11.12 des Glühofens 1 laufendes Bandes B gemessen werden kann.

Das Messsignal der IR-Messsonde 13 kann durch eine hier nicht dargestellte Auswerte- und Steuereinheit ausgewertet und als Temperatursignal zur Prozessüberwachung und -regelung des in dem Glühofen 1 ablaufenden Glühprozesses verwendet werden.

Wie in Fig. 1 erkennbar, läuft das Aluminiumband B zunächst über die Stützwalze 15 und durchläuft sodann eine Beschichtungseinheit, welche ihrerseits eine Sprühvorrichtung 17 und/oder eine Auftragsrolle 18 umfassen kann, über welche jeweils ein Dünnfilm S auf die Oberseite und/oder die Unterseite des Bandes B aufgetragen werden kann. Im einzelnen ist es möglich sowohl die Oberseite als auch die Unterseite über (jeweils) eine Sprüheinheit 17 zu beschichten. Ebenso ist es möglich, einen Rollenauftrag der Beschichtung S auf der Oberseite und der Unterseite vorzusehen. Vorliegend kann eine kombinierte Beschichtung vorgesehen sein, bei der die Oberseite des Aluminiumbandes B besprüht wird, während im Bedarfsfall auch die Unterseite des Bandes B mittels Rollenauftrags beschichtet werden kann. Dargestellt ist vorliegend eine lediglich auf der Oberseite des Aluminiumbandes B vorgesehene Beschichtung S. Es versteht sich, dass für eine unterseitige Messung der Emission der aufgetragenen Beschichtung bezogen auf das Band B wenigstens eine entsprechend unterseitig angeordnete IR-Messsonde 13 vorgesehen sein muss, wie in Fig. 1 allerdings nicht dargestellt.

Bei der aufzutragenden Beschichtung S handelt es sich um eine hochtemperaturfeste Beschichtung. Bevorzugt werden hier Silicatschmelzen, insbesondere Wasserglas. Diese ist bis zu einem Temperaturbereich von 900°C beständig und wird somit in der sich anschließenden Ofeneinheit nicht zerstört, kann folglich über die gesamte Länge des Glühofens 1 in erfindungsgemäßer Weise zur Oberflächentemperaturmessung genutzt werden. Vorliegend wird bei dem Schichtauftrag eine Nass-Schichtdicke von 5 µm bis 20 µm und/oder eine Trockenschichtdicke von 1 bis 10 µm gewählt. Hierdurch ist gewährleistet, dass die aufgetragene Beschichtung S einerseits ein hinreichend starkes Emissionssignal bei Beaufschlagung mit elektromagnetischer Strahlung geeigneter Wellenlänge, vorliegend von infraroter Strahlung, liefert. Andererseits ist die Schichtdicke hinreichend dünn gewählt, so dass die Beschichtung S insgesamt die Temperatur der beschichteten Oberfläche des Aluminiumbandes B annimmt und somit ein aussagekräftiges Signal für die tatsächliche Oberflächentemperatur des Aluminiumbandes B liefert.

Bei dem hier dargestellten Verfahren wird die Beschichtung S bevorzugt nicht über die gesamte Bandlänge aufgetragen, sondern nur abschnittweise, insbesondere über eine vordefinierte Länge und Breite, insbesondere zwischen 1 und 10 m Länge und 50 bis 200 mm Breite. Hierdurch kann zwar keine kontinuierliche Temperaturmessung mittels Strahlungsemission aus der aufgetragenen Beschichtung erzielt werden, jedoch liefert die diskontinuierliche Messung der aus den beschichteten Bandabschnitten emittierten Strahlung ein hinreichend genaues Ergebnis für die aktuelle Oberflächentemperatur, um eine geeignete Prozessüberwachung und -regelung zu realisieren.

Wir das Band B in Form von Coils bereitgestellt, so ist es beispielsweise möglich, die Beschichtung auf den ersten 1 bis 10 m oder den letzten 1 bis 10 m des Metallbandes aufzutragen.

Insgesamt wird das Aluminiumband erfindungsgemäß somit vor dem Einlaufen in den Glühofen 1 mit einer hochtemperaturfesten Beschichtung S in Form einer Wasserglasschicht - bevorzugt abschnittsweise - beschichtet, wobei die Beschichtung S im Glühofen im Bereich der IR-Messsonden durch die IR-Strahlquelle mit einem Messstrahl bestrahlt wird und daraufhin ein für die Oberflächentemperatur des Aluminiumbandes B charakteristisches Strahlungsspektrum emittiert, welches in der Detektoreinheit der IR-Messsonde 13 gemessen und in ein die Temperatur der Beschichtung S charakterisierenden elektrischen Signals umgewandelt wird.

Nachdem das Aluminiumband B den gesamten Glühofen 1 durchlaufen hat, wird es mittels einer schematisch dargestellten Hydrodüse 19 in definierter Weise schnell abgekühlt. Mittels einer weiteren IR-Messsonde 14, welche baugleich zu den IR-Messsonden 13 ausgeführt sein kann, kann der Schnellabkühlungsprozess präzise überwacht werden. Anschließend kann das abgekühlte Band B über eine weitere Stützwalze 16 einer weiteren Behandlung zugeführt werden. Beispielsweise kann es in einen hier nicht dargestellten Luftkühler einlaufen.

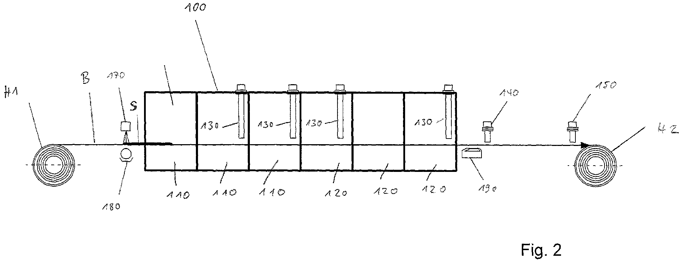

Fig. 2 zeigt eine weitere Anlage zur thermischen Behandlung von Aluminiumband in einer schematischen Längsschnittdarstellung. Auch diese Anlage umfasst einen Glühofen 100, welcher seinerseits in einer integralen Ofeneinheit drei hintereinander angeordnete Aufheizzonen 110 gefolgt von drei Haltezonen 120 aufweist. In der zweiten und dritten Aufheizzone 110 sowie in der ersten und dritten Haltezone 120 sind jeweils eine IR-Strahlquelle und eine IR-Detektoreinheit umfassende IR-Messsonde 130 angeordnet. Deren Funktionalität entspricht der der IR-Messsonden 13 in dem Glühofen 1 der Fig. 1.

Im Betrieb der Anlage der Fig. 2 wird ein Aluminiumband B von einer Haspel H1 abgewickelt und durchläuft wiederum eine Beschichtungseinheit, die eine oberseitige Sprüheinheit 170 und eine unterseitige Antragsrolle 180 umfasst, wobei zumindest oberseitig eine Beschichtung S aufgetragen wird. Die Beschichtung S ist wiederum als hochtemperaturfeste Wasserglasschicht ausgeführt. Innerhalb des Glühofens 100 erfolgt in erfindungsgemäßer Weise eine Oberflächentemperaturmessung durch Auswertung des Emissionsspektrums der mit IR-Strahlung beaufschlagten Wasserglasschicht. Nach Austreten aus dem Glühofen 100 erfolgt wiederum eine Schnellabkühlung mittels Hydrodüse 190 sowie eine erneute Temperaturmessung über die IR-Messsonden 140 und 150. Zwischen diesen IR-Messsonden kann eine weitere Kühleinheit, beispielsweise ein Luftkühler (nicht dargestellt), angeordnet sein. Schließlich wird das thermisch behandelte Band B auf einer zweiten Haspel H2 wieder aufgewickelt.

## Patentansprüche

1. Verfahren zur berührungslosen Messung hoher Oberflächentemperaturen an einem metallischen Objekt mit niedrigem Emissionsgrad, insbesondere einem Aluminiumband (B), umfassend die folgenden Verfahrensschritte:
- Bereitstellen einer Strahlquelle zur Erzeugung eines Messstrahls mit einem definierten Strahlungsspektrum,
- Bereitstellen einer Detektoreinheit zur Messung der Emission an der Oberfläche des metallischen Objekts (B),
- Auftrag einer Beschichtung (S) zumindest auf einen Teil der zu messenden Oberfläche des metallischen Objekts (B), wobei die Beschichtung (S) temperaturstabil in einem Temperaturbereich > 450°C ist,
- Bestrahlung der beschichteten Oberfläche mit dem Messstrahl der Strahlquelle,
- Messung des Emissionsspektrums der Beschichtung (S) durch die Detektoreinheit und Erzeugen eines die Temperatur der Beschichtung (S) charakterisierenden elektrischen Signals in der Detektoreinheit.

2. Verfahren nach Anspruch 1,
**dadurch gekennzeichnet, dass**
die Strahlungsquelle eine IR-Strahlungsquelle ist und die Detektoreinheit eine IR-Detektoreinheit ist.

3. Verfahren nach Anspruch 1 oder 2,
**dadurch gekennzeichnet, dass**
die Beschichtung (S) mittels Sprühen oder Rollenauftrag auf die Oberfläche des metallischen Objekts aufgebracht wird.

4. Verfahren nach einem der Ansprüche 1 bis 3,
**dadurch gekennzeichnet, dass**
die Nass-Schichtdicke der Beschichtung (S) 5 µm bis 20 µm und/oder die Trockenschichtdicke 1 bis 10 µm beträgt.

5. Verfahren nach einem der Ansprüche 1 bis 4,
**dadurch gekennzeichnet, dass**
als Beschichtung (S) eine Silicatschmelze, insbesondere Wasserglas, aufgetragen wird.

6. Verfahren nach einem der Ansprüche 1 bis 5,
**dadurch gekennzeichnet, dass**
das metallische Objekt ein Metallband, insbesondere ein Aluminiumband (B), ist.

7. Verfahren nach Anspruch 6,
**dadurch gekennzeichnet, dass**
die Beschichtung (S) auf dem Metallband (B) über eine vordefinierte Länge und Breite, insbesondere zwischen 1 und 10 m Länge und 50 bis 200 mm Breite, aufgetragen wird.

8. Verfahren nach Anspruch 6 oder 7,
**dadurch gekennzeichnet, dass**
die Beschichtung (S) aufgetragen wird und die Messung der Oberflächentemperatur bei laufender thermischer Behandlung des Metallbandes (B) durchgeführt wird.

9. Verfahren nach einem der Ansprüche 6 bis 8,
**dadurch gekennzeichnet, dass**
das Metallband (B) in Form von Coils bereitgestellt wird und die Beschichtung auf den ersten 1 bis 10 m oder den letzten 1 bis 10 m des Metallbandes (B) aufgetragen wird.

10. Verfahren nach einem der Ansprüche 6 bis 8,
**dadurch gekennzeichnet, dass**
das Verfahren kontinuierlich betrieben wird.

11. Verfahren nach einem der Ansprüche 1 bis 10,
**dadurch gekennzeichnet, dass**
das Verfahren in einem Bandschwebeofen, insbesondere einem Glühofen (1, 100), durchgeführt wird.

12. Vorrichtung zur berührungslosen Messung hoher Oberflächentemperaturen an einem metallischen Objekt (B) mit niedrigem Emissionsgrad, insbesondere einem Aluminiumband, mit einer Strahlquelle zur Erzeugung eines Messstrahls mit einem definierten Strahlungsspektrum, mit einer Detektoreinheit zur Messung der Emission an der Oberfläche des metallischen Objekts und mit einer Beschichtungseinheit (17, 18, 170, 180) zum Auftrag einer hochtemperaturbeständigen Beschichtung (S) auf zumindest einen Teil der zu messenden Oberfläche des metallischen Objekts (B).

13. Vorrichtung nach Anspruch 12,
**dadurch gekennzeichnet, dass**
die Strahlquelle und die Detektoreinheit in einer integralen Messsonde (13, 130) angeordnet sind.

14. Anlage zur thermischen Behandlung von Metallbändern, insbesondere von Aluminiumbändern, umfassend eine Vorrichtung nach Anspruch 12 oder 13.

15. Anlage nach Anspruch 14,
**dadurch gekennzeichnet, dass**
die Anlage wenigstens einen Glühofen (1, 100) und optional einen in Bandlaufrichtung dahinter angeordnet eine Kühleinheit, speziell einen Luftkühler, umfasst.
